**Europäisches Patentamt**

**European Patent Office**

**Office européen des brevets**

(11) Veröffentlichungsnummer: **0 374 696**
**A2**

## (12) EUROPÄISCHE PATENTANMELDUNG

(21) Anmeldenummer: **89122935.3**

(22) Anmeldetag: **12.12.89**

(51) Int. Cl.⁵: **G01P 3/487**

(30) Priorität: **17.12.88 DE 8815685 U**

(43) Veröffentlichungstag der Anmeldung:
**27.06.90 Patentblatt 90/26**

(84) Benannte Vertragsstaaten:
**DE FR GB IT**

(71) Anmelder: **AB Elektronik GmbH**
**Klöcknerstrasse 4**
**4712 Werne(DE)**

(72) Erfinder: **Op den Winkel, Franz, Dipl.-Ing.**
**Behnesstrasse 13**
**D-5840 Schwerte(DE)**

(74) Vertreter: **Hoffmeister, Helmut, Dr. Dipl.-Phys.**
**Patentanwalt Goldstrasse 36**
**D-4400 Münster(DE)**

(54) **Induktions-Sensorvorrichtung.**

(57) Die Erfindung betrifft eine Sensorvorrichtung für Kraftfahrzeuge, die aus einem mit einer sich drehenden Welle, insbesondere Nockenwelle, verbundenen magnetischen Geberelement und einer im Wirkungsbereich des Geberelementes angeordneten Induktionsspule mit Weicheisenkern besteht, wobei das Geberelement in einem geringen, fertigungsbedingte Toleranzen und betriebsbedingte Schwankungen berücksichtigenden Abstand an der Spitze des Kerns vorbeigeführt wird.

Die Erfindung stellt sich die Aufgabe, eine Sensorvorrichtung anzugeben, die weniger empfindlich auf betriebsübliche Erschütterungen und Abstandsschwankungen und dadurch bedingte Flußänderungen reagiert, die in einfacher Weise aufzubauen ist und die auch an Wellen angeschlossen werden kann, die mit niedriger Drehzahl rotieren.

Diese Aufgabe wird dadurch gelöst, daß als Geberelement wenigstens ein Permanentmagnet (3) vorgesehen ist, dessen magnetische Ausrichtung (N - S) in Richtung der Achse der Induktionsspule (4) zeigt.

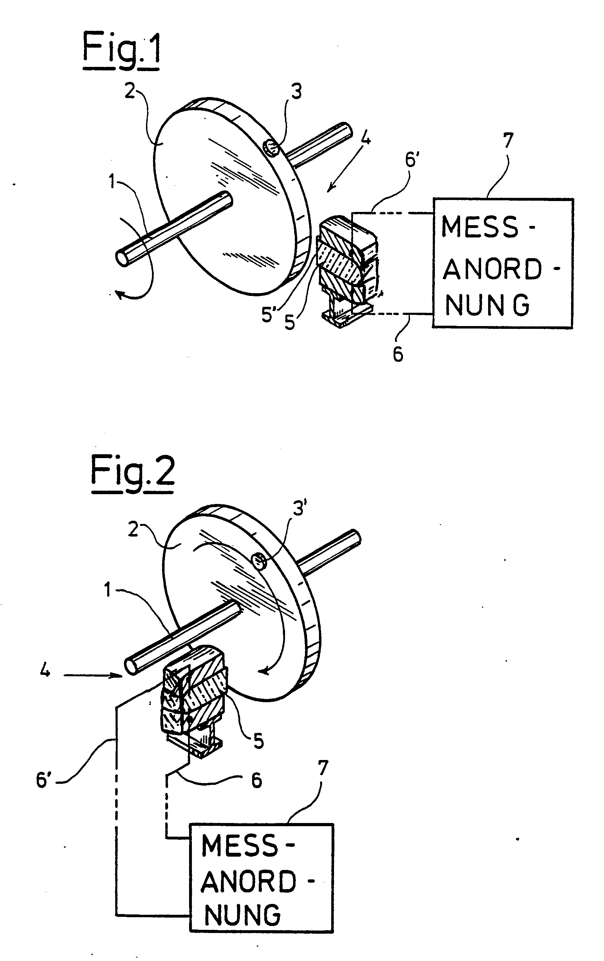

Zur Veröffentlichung vorgesehen ist Figur 1 der Zeichnung.

Fig.1

## Induktions-Sensorvorrichtung

Die Erfindung betrifft eine Sensorvorrichtung für Kraftfahrzeuge, die aus einem mit einer sich drehenden Welle, insbesondere Nockenwelle, verbundenen ferromagnetischen Geberelement und einer im Wirkungsbereich des Geberelementes angeordneten Induktionsspule mit Kern besteht, wobei das Geberelement in einem geringen, betriebsbedingte Schwingungen und fertigungsbedingte Toleranzen berücksichtigenden Abstand an der Spitze des Kerns vorbeigeführt wird.

Induktive Sensoren mit passiven Magnet-Elementen werden in großen Stückzahlen für die Automobilindustrie hergestellt. Der wesentliche Aufbau bekannter Sensoren geht aus folgender Veröffentlichung hervor: Franz Op den Winkel, "Induktive Sensoren mit Permanentmagnet zur Drehzahlmessung", Zeitschrift "e" vom 29. Juli 1986. Durch einen Permanentmagneten wird ein magnetischer Kreis mit dem magnetischen Fluß Ohergestellt. Die Größe dieses Flusses hängt von der Scherung des magnetischen Kreises ab, also auch vom Luftspalt zwischen Polkern und Geberelement. Bei Drehung des mit dem Geberelement bestückten Rades, das beispielsweise ein Zahnrad sein kann, ändert sich die Größe des Luftspaltes und die daraus resultierende Flußänderung induziert in der Spule eine Spannung. Es hat sich gezeigt, daß die bekannten Sensoren zwar für die üblichen Anwendungsfälle durchaus geeignet sind. Ins besondere ergeben sich jedoch Schwierigkeiten, wenn die zeitliche Änderung des Flusses gering wird, insbesondere bei langsam drehenden Wellen, wie es beispielsweise die Nockenwelle ist. Weiterhin ergeben sich bei dem Betrieb von Kraftfahrzeugen durch die betriebsüblichen Erschütterungen und Schwankungen, aber auch durch fertigungsbedingte Toleranzen, störende Einflüsse, da auch hierdurch zeitliche Änderungen das Magnetflusses erzeugt werden. Hierbei ergibt sich der sogenannte Mikrophonie-Effekt, d. h. der eigentlichen Meßgröße überlagern sich Schwankungen der Meßwerte, die auf den betriebsüblichen Erschütterungen des Motors beruhen und die im niederfrequenten bis mittelfrequenten Bereich zu finden sind.

Bei der Verwendung bekannter Sensoren ist man daher auf eine relativ hohe Drehgeschwindigkeit und auf Anordnungen angewiesen, bei denen die Schwankungen möglichst unterdrückt sind oder nicht auftreten. Diese Forderungen begrenzen die Anwendbarkeit der bekannten Sensoren.

Es stellt sich demnach gemäß Erfindung die Aufgabe, eine Sensorvorrichtung anzugeben, die weniger empfindlich auf betriebsübliche Erschütterungen und Abstandsschwankungen und dadurch bedingte Flußänderungen reagiert, die in einfacher Weise aufzubauen ist und die auch an Wellen angeschlossen werden kann, die mit niedriger Drehzahl rotieren.

Diese Aufgabe wird bei einer Sensorvorrichtung der eingangs genannten Art dadurch gelöst, daß als Geberelement wenigstens ein hochmagnetisierter Permanentmagnet vorgesehen ist, wobei seine magnetische Ausrichtung ("Nordpol" N - "Südpol" S) in Richtung der Achse der Induktionsspule zeigt.

Beispielsweise sind daher Ausrichtungen möglich, bei der die magnetische Ausrichtung in Radialrichtung zur Welle liegt oder bei der die magnetische Ausrichtung parallel zur Wellenachse liegt, also an der Stirnseite einer Radscheibe befestigt ist.

Dabei sollte der mittlere Durchmesser $D_m$, des Permanentmagneten sich um maximal ± 20 % vom Durchmesser des Kerns $D_k$ des Kerns unterscheiden.

Es zeigt sich, daß bei Abmessungen des Permanentmagneten in der Größenordnung Durchmesser von 1 - 10 mm und Herstellung aus hochwirksamen Magnet-Legierungen sich ein völlig neuer Meßbereich für derartige Sensorvorrichtungen erschließt. Es können wesentlich höhere Toleranzen an Abstandsschwankungen überbrückt werden. Beispielsweise bei einem Nennabstand von 1 mm zwischen den Stirnseiten von Kern und Permanentmagnet lassen sich ohne weiteres Schwankungen von 0,5 mm überbrücken. Bei den bekannten Sensoren würden hierbei nicht annehmbare Meßwertschwankungen auftreten. Auf der anderen Seite kann die Umdrehungsgeschwindigkeit der Welle bei vergleichsweise gleichen Schwankungen wie bei dem Stand der Technik wesentlich herabgesetzt werden, ohne daß es zu einem zu niedrigen Signal-Rausch-Verhältnis kommt.

Je nach den Erfordernissen können ein oder auch mehrere Permanentmagnete in Bezug auf die sich drehende Welle befestigt sein, vorzugsweise an einer mit der Welle verbundenen Scheibe. Es ist lediglich erforderlich, daß die magnetischen Streubereiche nicht sich gegenseitig so weit überlappen, daß es zu Meßfehlern kommt.

Ein Ausführungsbeispiel der Erfindung ist in der **Zeichnung** dargestellt. Die Figuren der Zeichnung zeigen:

Figur 1 eine Anordnung des Permanentmagneten auf der äußeren Peripherie einer Radscheibe;

Figur 2 eine Anordnung des Permanentmagneten an der Stirnseite einer Radscheibe.

Die in der Figur 1 der Zeichnung schematisch dargestellte Sensorvorrichtung für Kraftfahrzeuge geht aus von einer sich drehenden Welle 1, die beispielsweise eine Verlängerung oder ein Teil der Nockenwelle sein kann. Es ist jedoch auch möglich, andere Wellen, beispielsweise die Antriebswelle der Räder, die Tachowelle oder dergleichen mit der Anordnung zu versehen. Die Welle 1 ist mit einer Radscheibe 2 versehen, die aus nicht-magnetischem Material, beispielsweise Kunststoff oder Aluminium besteht. An ihrer Peripherie trägt die Radscheibe 2 einen als Geberelement fungierenden Permanentmagneten 3, der in die Radscheibe 2 eingelassen ist und etwas über ihre Peripherie vorragt. Im vorliegenden Fall besteht der Permanentmagnet aus einer hochmagnetisierbaren Cobalt-Samarium-Legierung, wie sie an sich bekannt ist.

Der Permanentmagnet hat beispielsweise einen Durchmesser zwischen 4 und 7 mm, wobei der Durchmesser des Permanentmagneten $D_m$ dem Durchmesser $D_k$ des Kerns der Induktionsspule entspricht. Im magnetischen Wirkungsbereich des Permanentmagneten 3 ist eine Induktionsspule 4, die in der Figur im Schnitt dargestellt ist, fest montiert. Die Induktionsspule 4 weist einen Weicheisenkern 5 auf, dessen Stirnseite 5' vom Geberelement, d. h. vom Permanentmagneten 3, einen möglichst geringen, betriebsbedingte Schwingungen berücksichtigenden Abstand aufweist. Die betriebsbedingten Schwingungen und Schwankungen können jedoch erheblich sein. Bei einem Nennabstand von beispielsweise 0,8 - 1 mm können durchaus Schwankungen von 0,5 mm auftreten, wodurch sich auch erhebliche Schwankungen des magnetischen Flusses in Abhängigkeit von der Zeit ergeben können, die die Meßgenauigkeit beeinflussen.

Es hat sich aber gezeigt, daß diese erheblichen Schwankungen ohne weiteres von der hier vorgeschlagenen Meßanordnung ohne Auftreten verfälschender Meßergebnisse toleriert werden.

Statt eines einzigen Permanentmagneten können selbstverständlich auch mehrere um die Achse gleichmäßig verteilte Permanentmagnete angebracht werden, so daß bei einer Umdrehung mehrere Impulse ausgelöst werden.

Insbesondere eignet sich die Vorrichtung für Nockenwellen-Sensoren mit relativ niedriger Drehzahl.

Die in der Spule induzierte Spannung wird über eine Leitung 6, 6' an eine Meßanordnung 7 übertragen, die jedoch selbst nicht Gegenstand der Erfindung ist. Eine Schaltung zur Auswertung von Sensorsignalen ist beispielsweise in der eingangs genannten Fundstelle beschrieben.

Figur 2 zeigt in ähnlich schematisierter Art eine andere Ausführungsform einer Sensorvorrichtung. Die drehende Welle 1 ist mit einer Radscheibe 2 versehen, die aus nicht-magnetischem Werkstoff besteht. Aus ihrer Stirnseite 7 ragt ein Permanent-Magnet 3' in der Nähe des äußeren Umfanges der Scheibe ein Stück vor. Der Permanent-Magnet besteht aus einer hochmagnetisierbaren Kobaldt-Legierung.

Der Permanent-Magnet hat einen Durchmesser von 5 mm, wobei der Kern 5 der verdeckten Induktionsspule 4 einen Durchmesser von 6 mm aufweist. Letzterer besteht aus Weicheisen. Der rotierende Magnet 3' hat eine magnetische Ausrichtung ("Nordpol" N - "Südpol" S), der parallel zu der Achse der Welle liegt und in Richtung der Achse der Induktionsspule 4 ausgerichtet ist. Auch bei dieser Anordnung bewegt sich das Geberelement, d. h. der Permanentmagnet, in einem geringen, fertigungsbedingte Toleranzen und betriebsbedingte Schwingungen berücksichtigenden Abstand vor dem Kern der Induktionsspule. Auch hier lassen sich erhebliche Schwankungen auffangen, ohne daß die erforderliche Meßmöglichkeit eingeschränkt ist.

Wie im vorgenannten Beispiel wird die in der Spule induzierte Spannung über eine Leitung 6, 6' an eine Meßanordnung 7 übertragen, wie sie an sich bekannt ist.

## Ansprüche

1. Sensorvorrichtung für Kraftfahrzeuge, die aus einem mit einer sich drehenden Welle, insbesondere Nockenwelle, verbundenen magnetischen Geberelement und einer im Wirkungsbereich des Geberelementes angeordneten Induktionsspule mit Weicheisenkern besteht, wobei das Geberelement in einem geringen, fertigungsbedingte Toleranzen und betriebsbedingte Schwankungen berücksichtigenden Abstand an der Spitze des Kerns vorbeigeführt wird, dadurch gekennzeichnet, daß als Geberelement wenigstens ein Permanentmagnet (3) vorgesehen ist, dessen magnetische Ausrichtung (N - S) in Richtung der Achse der Induktionsspule (4) zeigt.

2. Sensorvorrichtung nach Anspruch 1, dadurch gekennzeichnet, daß die magnetische Ausrichtung in Radialrichtung zur Wellenachse liegt.

3. Sensorvorrichtung nach Anspruch 1, dadurch gekennzeichnet, daß die magnetische Ausrichtung parallel zur Achse der Welle (1) liegt.

4. Sensorvorrichtung nach Anspruch 1 bis 3, dadurch gekennzeichnet, daß der mittlere Durchmesser $D_m$ des Permanentmagneten (3) sich um maximal ± 20 % vom Durchmesser $D_k$ des Kerns (5) der Induktionsspule (4) unterscheidet.

5. Sensorvorrichtung nach Anspruch 1 bis 4, dadurch gekennzeichnet, daß der Permanentmagnet (3) aus einer Cobalt-Samarium-Legierung besteht.

6. Sensorvorrichtung nach Anspruch 1 bis 5, dadurch gekennzeichnet, daß der Permanentmagnet (3) mit einer auf der Welle sitzenden Scheibe (2) verbunden ist, über dessen Peripherie oder Stirnseite er bis zu 10 mm vorragt.

## Fig.1

MESS-ANORD-NUNG

## Fig.2

MESS-ANORD-NUNG